# EUROPEAN PATENT APPLICATION

(11) **EP 1 039 614 A2**
(43) Date of publication of application: **27.09.2000**
(21) Application number: 00201090.8
(22) Date of filing: 24.03.2000
(51) Int. Cl.: H02J 13/00

(54) **Switching line system**

(30) Priority: 25.03.1999 NL 1011672
(71) Applicant: AGMAT B.V., NL-5469 EM Erp (NL)
(72) Inventor: van Kaathoven, Hendricus Theodorus, 5741 ST Beek en Donk (NL)
(74) Representative: Ottevangers, Sietse Ulbe

(57) **Abstract**

A switching line system comprises a direct voltage supply line, a data signal line, a number of switching units connected to these lines, and a control unit operable from a computer, by means of which control unit and via which lines switching units designated by the computer can be activated or deactivated at moments recorded in the computer. The data signal line is formed by the supply line.

The supply line, also data signal line, is particularly designed in the form of a plastic cable which can be stuck on the plug connection of the valve control unit.

## Description

The present invention relates to a switching line system for activating and deactivating switching units for the control of mechanical valves, motors, lamps, etc., in particular the individual control of larger numbers thereof. The invention particularly relates to a switching line system comprising a direct voltage supply line, a data signal line, a number of switching units connected to these lines, and a control unit operable from a computer, by means of which control unit and via which lines switching units designated by the computer can be activated or deactivated at moments recorded in the computer. Such a switching line system can be used in, e.g., stables, in particular pigsties, for the control of feeding plants arranged in separate stalls in these sties. The line systems used therefor in practice, which possibly have to be installed throughout the stable, are rather complicated, while the mounting thereof is time-consuming.

To remove this objection at least substantially, the switching line system as described in the opening paragraph is according to the invention characterized in that the data signal line is formed by the supply line.

To keep the switching line system as simple as possible, the supply line is preferably a two-wire line, one wire of which forms the data signal line for a valve code for the identification of a switching unit designated by the computer. On receipt of a valve code associated with a specific switching unit, the switching unit may, for instance, be activated, and on a subsequent receipt of the same valve code the switching unit may then be deactivated again. The switching unit may also be deactivated again after the lapse of a fixed time.

The supply line, also data signal line, is connected to the control unit, while, furthermore, a number of switching units are parallel connected to this line system, each of which comprising a valve control unit and a switch operable by this unit.

A valve control unit comprises a plug connection for the line system, and the supply line, also data signal line, is designed in the form of a plastic cable which can be stuck on this plug connection. Thus the installation of a moisture-resistant switching line system in a relevant space, such as, for instance, a stable space, is substantially simplified.

If the cable has been stuck on the plug connection insufficiently accurately, for instance askew, it may occur that no contact is made between a plug connection and supply line, also data signal line. To exclude this as much as possible, the plug connection is provided for each wire of the two-wire line in the cable with two connecting points which are located one behind the other in the longitudinal direction of the cable to be stuck on the plug connection.

The person operating the system may record in the computer which switching units have to be operated when. To identify the different switching units, the control unit operable from the computer is provided with a modulator for modulating a valve code provided via the computer to the direct voltage on the supply line. To enable the operation of a switch in the relevant switching unit on the basis of this valve code, the valve control unit is provided with a demodulator for reading the valve code of the supply line, also data signal line, and with comparison means for comparing the read-out valve code with a comparison code entered into a memory of the valve control unit, and after established consistency between the two codes the relevant switch is opened or closed.

The invention will now be explained in more detail with reference to the accompanying drawings, in which:
Fig. 1 is a schematic representation of a switching line system according to the invention;
Fig. 2 is a cross-section of a valve control unit included therein with a plug connection;
Fig. 3 is a top plan view of this valve control unit with a supply line, also data signal line, stuck on the plug connection;
Fig. 4 is a detail of a possible plug connection.

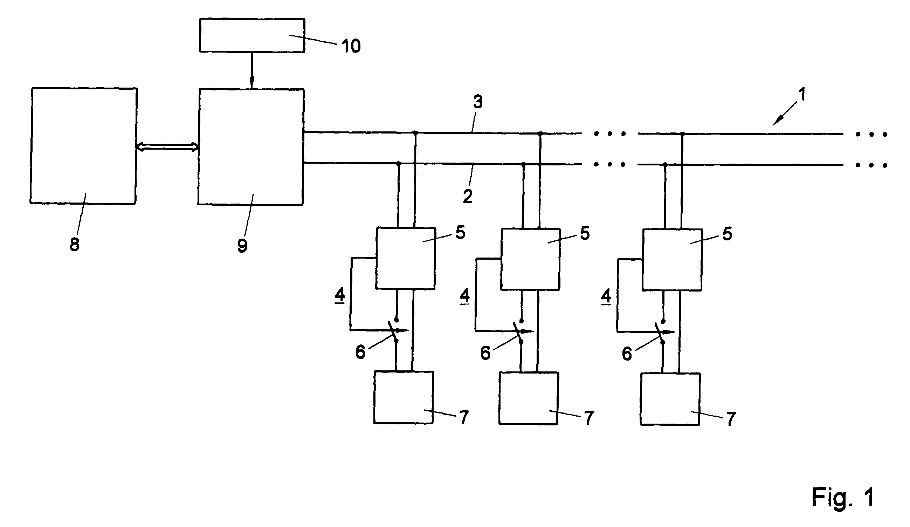

The switching line system shown in Fig. 1 is suitable for use in switching on and off electrically operable feeding plants in separate stalls of a pigsty. The switching line system comprises a supply line 1 with an earth wire 2 and a direct voltage wire 3, which also forms a data signal line. Connected to the two-wire line 1 are a number of switching units 4. Although Fig. 1 only shows three of such switching units 4, in practice tens to even hundreds of such switching units may be connected to the line 1, depending on the use of the switching line system. Each switching unit 4 comprises a valve control unit 5 and a switch 6. By means of the switch 6 an electrically operable feeding plant 7 in a pigsty may be switched on and off. The line 1 is connected to a control unit 9 operable from a computer 8. The control unit 9 comprises a modulator for modulating a valve code provided via the computer 8 to the direct voltage outputted by a direct voltage source 10 and for subsequently passing this valve code on the line 1 along all the switching units 4. The valve code means an identification of one of the different switching units. Each valve control unit 5 is provided with a memory in which the individual valve code is recorded. The valve code read from the computer, modulated to the supply voltage, is passed via the line 1 along all the switching units 4 and is recognized by one of these switching units. To this end, the valve control units are provided with comparison means for comparing the read-out valve code with the valve code entered into the memory of a valve control unit, and after established consistency between the two codes the relevant switch 6 are opened or closed and the relevant feeding plant 7 are activated or deactivated. Besides the valve code, information of a different kind may of course also be passed via the line 1 to a specific switching unit. This may be information which distinguishes between an activation instruction or a deactivation instruction, but also information which indicates how much time a switching unit has to be activated, in which case a deactivation instruction is no longer necessary. By means of the switching line system described herein, large numbers of feeding plants 7 can be activated at any desired moment for an arbitrary time interval and the feed supply to the animals in the different stalls of the sty can be regulated permanently. Instead of or in addition to the feeding plants 7, other plants can also be operated like this, for which motors, lamps, etc. may be considered.

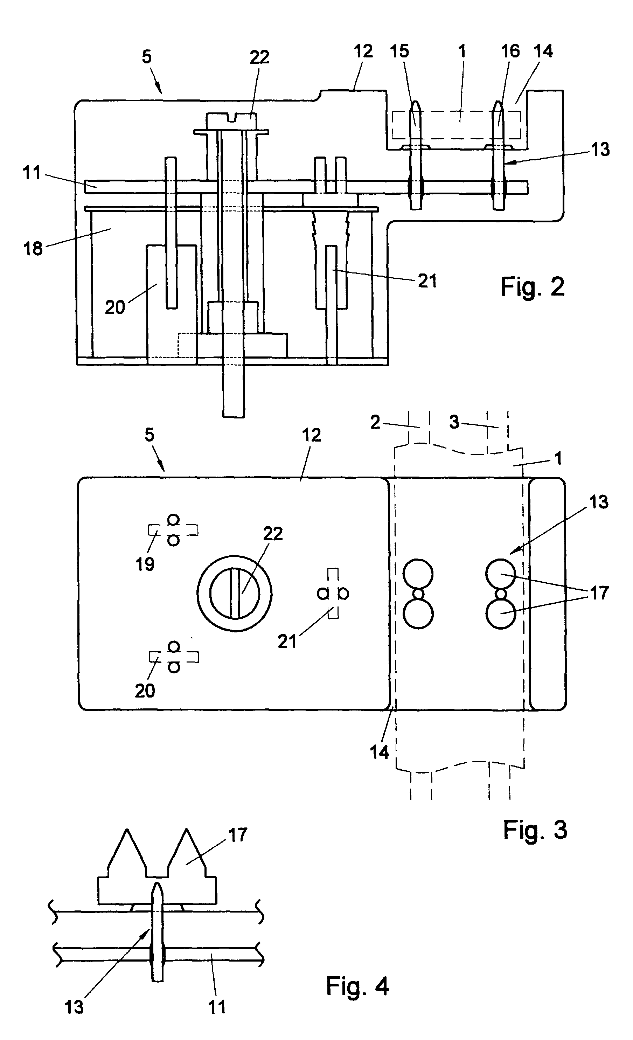

Figs. 2 and 3 show a valve control unit 5 with an associated switch 6. Such a valve control unit may be arranged in each stall of the pigsty. The heart of the valve control unit 5 is formed by a printed circuit board 11, on which are arranged the electronics for realizing the above-described functions. The printed circuit board 11 is enclosed in a housing 12. Also arranged on the printed circuit board further is a plug connection 13 for the line 1. Provided on the upper side of the housing 12 is a slot 14, into which the line 1 fits. By designing the line 1 in the form of a plastic cable, it is made possible to stick it on the connecting pins 15 and 16 (Fig. 2) of the plug connection 13. To be sure that thus electric contact is made with the wires 2 and 3, the ends of these pins are provided with a double plug pin 17 (Fig. 4). The two ends of this plug pin are located in the longitudinal direction of the line 1. Even if the line 1 is stuck on the plug pin 17 while not being exactly straight in the slot 14, at least one of the two ends will, anyhow, make electric contact with the relevant wires 2 and 3. Provided in the housing 12 of the valve control unit 5 is a carrying construction 18 for connecting pins 19, 20 and 21 for a connection with a switch 6. These connecting pins are also secured on the printed circuit board 11, while the printed circuit board 11 is secured on the carrying construction 18 by means of a bolt 22. The connecting pins 19, 20 and 21 may be connected with an electromagnetic or pneumatic switch for activating or deactivating the feeding plant 7.

The invention is not limited to the exemplary embodiment described herein with reference to the drawing, but comprises all kinds of modifications thereof, of course as far as falling within the scope of protection of the appended claims. It is emphasized that by means of the switching line system all kinds of possible components, such as motors, lamps, etc. may be operated in arbitrary numbers. The switching line system is not limited to the use in stables, but can also be installed in workshops and other kinds of buildings.

## Claims

1. A switching line system, comprising a direct voltage supply line, a data signal line, a number of switching units connected to these lines, and a control unit operable from a computer, by means of which control unit and via which lines switching units designated by the computer can be activated or deactivated at moments recorded in the computer, characterized in that the data signal line is formed by the supply line.

2. A switching line system according to claim 1, characterized in that the supply line is a two-wire line, one wire of which forms the data signal line for a valve code for the identification of a switching unit designated by the computer.

3. A switching line system according to claim 2, characterized in that the supply line, also data signal line, is connected to the control unit, while, furthermore, a number of switching units are parallel connected to this line system, each of which comprising a valve control unit and a switch operable by this unit.

4. A switching line system according to claim 3, characterized in that a valve control unit comprises a plug connection for the supply line, also data signal line.

5. A switching line system according to claim 4, characterized in that the supply line, also data signal line, is designed in the form of a plastic cable which can be stuck on the plug connection.

6. A switching line system according to claim 5, characterized in that the plug connection for each wire of the two-wire line in the cable has two connecting points which are located one behind the other in the longitudinal direction of the cable to be stuck on the plug connection.

7. A switching line system according to any of claims 2-6, characterized in that the control unit operable from the computer is provided with a modulator for modulating a valve code provided via the computer to the direct voltage on the supply line.

8. A switching line system according to any of claims 3-7, characterized in that the valve control unit is provided with a demodulator for reading the valve code of the supply line, also data signal line, and with comparison means for comparing the read-out valve code with a comparison code entered into a memory of the valve control unit, and after established consistency between the two codes the relevant switch is opened or closed.
